# FASCICULE DE BREVET EUROPEEN

(11) **EP 1 621 906 B1**
(45) Date de publication et mention de la délivrance du brevet: **26.10.2011**
(21) Numéro de dépôt: 05291573.3
(22) Date de dépôt: 22.07.2005
(51) Int. Cl.: G02B 6/42, H01L 27/15

(54) **Composant incluant un élément optoélectronique positionné à affleurement et recouvert d'un guide d'onde**
Vorrichtung mit bündig montiertem optelektronischem Element das von einem Lichtwellenleiter bedeckt ist
Device including a flush-mounted optoelectronic element covered by a waveguide

(30) Priorité: 26.07.2004 FR 0408233
(43) Date de publication de la demande: 01.02.2006
(73) Titulaire: e-KLO, 34000 Montepellier (FR)
(72) Inventeur: Coudray, Paul, 34270 Saint Jean de Cuculles (FR)
(74) Mandataire: Berger, Helmut

(56) Documents cités:
- EP-A- 1 271 210
- US-A- 4 760 569
- US-A- 4 860 294
- US-A- 5 854 868
- US-A1- 2002 176 664
- LIU Y S ET AL: "Polymer optical interconnect technology (POINT) optoelectronic packaging and interconnect for board and backplane applications" ELECTRONIC COMPONENTS AND TECHNOLOGY CONFERENCE, 1996. PROCEEDINGS., 46TH ORLANDO, FL, USA 28-31 MAY 1996, NEW YORK, NY, USA,IEEE, US, 28 mai 1996 (1996-05-28), pages 308-315, XP010167260 ISBN: 0-7803-3286-5
- PATENT ABSTRACTS OF JAPAN vol. 1997, no. 02, 28 février 1997 (1997-02-28) -& JP 08 255949 A (NIKON CORP), 1 octobre 1996 (1996-10-01)
- BOOTH BRUCE L ET AL: "Polyguide polymeric technology for optical interconnect circuits and components", PROCEEDINGS OF SPIE - THE INTERNATIONAL SOCIETY FOR OPTICAL ENGINEERING 1997 SOCIETY OF PHOTO-OPTICAL INSTRUMENTATION ENGINEERS, vol. 3005, 12 February 1997 (1997-02-12), - 14 February 1997 (1997-02-14), pages 238-251,

## Description

L'invention concerne un composant incluant un élément optoélectronique, tel qu'une photodiode ou une diode laser, cet élément optoélectronique étant destiné à être accouplé à une fibre optique.

L'invention concerne de façon générale un composant comprenant un ou plusieurs éléments optoélectroniques sur un même substrat. On entend ici par élément optoélectronique un élément convertisseur tel qu'une photodiode unitaire ou plusieurs photodiodes en barrettes, destinées à être couplées à une ou plusieurs fibres optiques. Un tel composant peut être, par exemple, un photorécepteur sous la forme d'une puce portant une photodiode.

L'élément optoélectronique peut aussi être une diode laser à émission par surface encore connue sous l'acronyme ''VCSEL'', ou bien une barrette de telles diodes laser, destinées à être couplées à une ou plusieurs fibres optiques. Cet élément optoélectronique peut encore être une diode laser à émission par la tranche, comme par exemple une diode du type usuellement désigné par l'acronyme ''DFB''.

Il est connu de fabriquer un photorécepteur en accouplant l'extrémité d'une fibre optique à une surface active d'une photodiode. Cet accouplement nécessite de cliver et de polir une extrémité de la fibre optique à 45° pour la recouvrir d'un système réfléchissant tel qu'une couche métallique. Un faisceau de lumière véhiculé par la fibre optique se reflète ainsi sur l'extrémité de cette fibre optique pour éclairer au mieux une surface active de la photodiode.

La surface active d'une photodiode a des dimensions de l'ordre de 30 microns, de sorte qu'aligner la fibre optique avec la photodiode constitue une opération délicate. Cet alignement, ainsi que le clivage et le polissage de l'extrémité de la fibre optique et sa métallisation sont réalisés manuellement, ce qui constitue, compte tenu de la précision souhaitée, des étapes de fabrication coûteuses.

D'autre part, le photorécepteur ainsi obtenu est formé par l'extrémité de fibre optique qui est collée à la photodiode, ce qui constitue un assemblage fragile, susceptible de se rompre.

Le document "Polymer optical interconnect technology (POINT) - optoelectronic packaging and interconnect for board and backplane applications," Y.S. Liu et al., Proc. Electronic Components and Technology Conference, 1996, Orlando, USA, 28 mai 1996, divulgue un composant selon le préambule de la revendication 1.

Le document US5854868 divulgue un procédé d'intégration d'élément optoélectronique et de guide d'onde optique entre des fibres optiques et l'élément optoélectronique. On y construit dans une première étape un niveau surélevé sur un substrat de silicium pour former une électrode puis on forme une couche tampon dont on fait varier l'épaisseur. Dans une deuxième étape, la soudure est utilisée pour monter des diodes électroluminescentes sur les électrodes.

Le but de l'invention est de remédier à ces inconvénients en proposant un composant comprenant un ou plusieurs éléments optoélectroniques à accoupler à une ou plusieurs fibres optiques, qui a un faible coût de fabrication et qui est plus robuste que les composants connus de l'état de la technique.

A cet effet, l'invention a pour objet un composant comprenant un substrat et une couche tampon déposée sur ce substrat, un élément optoélectronique tel qu'une photodiode ou une diode laser à émission de surface, cet élément optoélectronique ayant une surface active, et un guide d'onde s'étendant sur une surface supérieure de la couche tampon et ayant une extrémité accouplée à la surface active, **caractérisé en ce que** l'élément optoélectronique est positionné à affleurement dans une cavité traversant la couche tampon et s'étendant jusque dans le substrat, sa surface active étant sensiblement au même niveau que la surface supérieure de la couche tampon, et en ce que le guide d'onde a une extrémité qui recouvre au moins partiellement la surface active.

Selon un mode de réalisation préféré de l'invention, l'élément optoélectronique est un laser à émission de surface.

Selon un autre mode de réalisation préféré de l'invention, l'extrémité du guide d'onde est couplée à la surface active de l'élément optoélectronique par couplage par ondes évanescentes.

Selon un autre mode de réalisation préféré de l'invention, l'extrémité du guide d'onde est couplée à la surface active de l'élément optoélectronique par un réseau de Bragg blazé inscrit dans l'extrémité du guide d'onde.

Selon un autre mode de réalisation préféré de l'invention, le composant comprend une ou plusieurs fonctions optiques interposées entre la fibre optique et un ou plusieurs des éléments optoélectroniques, et au moins une fonction optique est réalisée à partir de guides d'onde et de réseau de Bragg.

L'invention concerne également un procédé de fabrication d'un composant incluant un élément optoélectronique, consistant à :
- déposer une couche tampon sur un substrat ;
- réaliser une cavité dans la couche tampon et dans le substrat ;
- positionner un élément optoélectronique dans la cavité ;
- déposer une couche de guidage sur la couche tampon et sur l'élément optoélectronique ;
- réaliser un guide d'onde dans cette couche de guidage;
- déposer une autre couche tampon sur le guide d'onde et sur la couche tampon.

L'invention sera maintenant décrite plus en détail, et en référence aux dessins annexés qui en illustrent une forme de réalisation à titre d'exemple non limitatif.
La figure 1 est une vue de dessus d'un photorécepteur selon l'invention comprenant une barrette de quatre photodiodes ;
La figure 2 est une vue de dessus montrant l'une des photodiodes de la barrette visible figure 1 ;
La figure 3 montre schématiquement une plaquette de silicium sur laquelle sont fabriqués plusieurs composants selon l'invention ;
Les figures 4 à 13 illustrent différentes étapes du procédé de fabrication selon l'invention.

L'idée à la base de l'invention est d'intégrer plusieurs éléments optoélectroniques sur un même substrat, ainsi que plusieurs fonctions optiques telles que démultiplexeur optique ou autre constituées à base de guide d'onde.

Les figures montrent des exemples dans lesquels le ou les éléments optoélectronique sont des photodiodes, mais l'invention s'applique également à l'implantation d'éléments tels que des diodes laser à émission de surface, ou encore à des diodes laser à émission par la tranche.

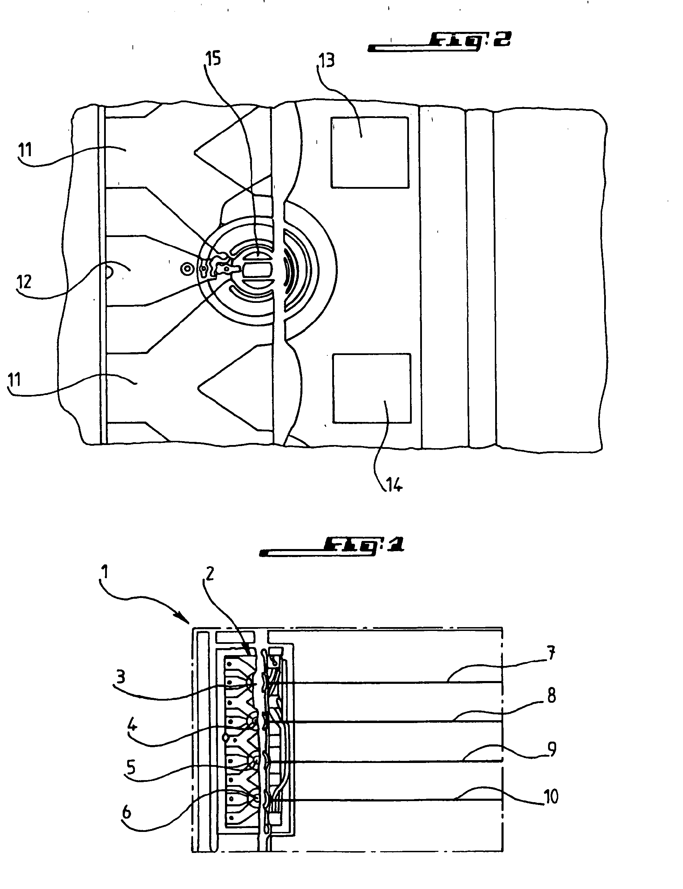

La figure 1 montre un composant photorécepteur 1 selon l'invention, incluant une barrette 2 de quatre photodiodes, repérées respectivement par 3 à 6, qui sont implantées sur un substrat. Ce composant photorécepteur 1 inclut également quatre guides d'ondes représentés de façon schématique et repérés respectivement par 7 à 10 qui, dans cet exemple, sont accouplés chacun à une photodiode correspondante.

La figure 2 montre plus en détail l'une des photodiodes de la figure 1, faisant apparaître une anode et une cathode repérées par 11 et 12, ainsi que deux repères de positionnement 13 et 14 . L'anode et la cathode sont destinées à recevoir des conducteurs électriques tels que des conducteurs en or soudés pour recueillir un signal électrique issu de cette photodiode.

Chaque guide d'onde qui est représenté figure 1, est fabriqué après implantation des photodiodes sur le substrat, de sorte que chaque guide d'onde a une extrémité qui recouvre au moins partiellement une photodiode pour être accouplé à celle-ci. Plus particulièrement chaque guide d'onde a son extrémité positionnée sur une surface active 15 d'une photodiode de manière à la recouvrir partiellement ou en totalité, cette surface active étant représentée sur la figure 2.

Chaque guide d'onde qui a une extrémité couplée à une photodiode, a son autre extrémité couplée à une fibre optique non représentée. Un signal lumineux véhiculé par une fibre optique couplée à un guide d'onde atteint ainsi la surface active de la photodiode après avoir parcouru le guide d'onde correspondant.

Le couplage d'une extrémité de guide d'ondes avec une photodiode peut, par exemple, être un couplage par ondes évanescentes. Chaque photodiode est fabriquée dans un matériau semi-conducteur ayant un indice de réfraction supérieur au matériau constitutif des guides d'ondes, le matériau constitutif de ces guides d'onde étant du type hybride.

Du fait que dans un système optique, un signal lumineux se propage vers le milieu ayant l'indice de réfraction le plus élevé, la lumière véhiculée dans un guide d'onde migre depuis l'extrémité de ce guide d'ondes vers le matériau semi-conducteur constitutif de la photodiode.

Chaque guide d'onde est fabriqué après implantation de l'élément optoélectronique correspondant, pour que l'extrémité de ce guide d'onde recouvre la surface active de l'élément optoélectronique afin d'assurer un couplage optimal.

Le couplage par ondes évanescentes entre guide d'onde et photodiode peut être amélioré par photoinscription d'un réseau de Bragg blazé dans l'extrémité du guide d'onde qui est située sur la surface active 15.

Ce réseau de Bragg blazé réfléchit le signal lumineux véhiculé dans le guide d'onde hors de ce guide d'onde. Si ce réseau de Bragg blazé a un angle de l'inclinaison, par rapport à l'axe de propagation du guide d'onde qui est bien ajusté, typiquement voisin de 45°, l'ensemble du signal lumineux véhiculé dans le guide d'onde est réfléchi en direction de la surface active 15 de la photodiode. Un couplage voisin de 99%, aux pertes près, peut ainsi être obtenu.

L'exemple des figures 1 et 2 montre un composant comprenant quatre guides d'ondes distincts destinés à être accouplés à quatre fibres optiques distinctes pour les relier à quatre photodiodes. Mais ce composant pourrait aussi bien comprendre un démultiplexeur optique relié en entrée à un guide d'onde, et en sortie à quatre guides d'onde. Un tel composant permet, par exemple, de décomposer un signal lumineux entrant en quatre longueurs d'ondes reçues respectivement par quatre photodiodes. Un démultiplexeur optique peut être réalisé sur la base de guides d'ondes spécifiques.

Le composant 1 montré sur la figure 1 est obtenu par application de différentes couches sur une même couche support, de telle sorte qu'une même plaquette de support telle qu'une plaquette en silicium, peut servir de base pour la fabrication de plusieurs composants tels que celui de la figure 1.

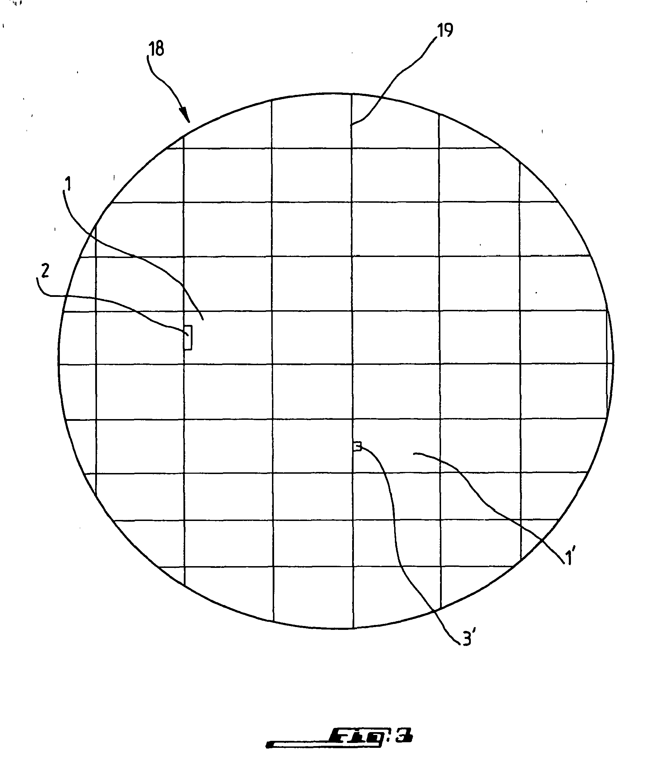

Une telle plaquette, encore connue sous l'appellation gaufre, ou ''wafer'' est représentée figure 3. Cette plaquette 18 qui peut être en silicium ou tout autre matériau semiconducteur constitue un support sur lequel sont fabriqués plusieurs composants en une seule série d'opérations de fabrication.

Dans l'exemple de la figure 3, la plaquette comprend d'une part le composant photorécepteur 1 de la figure 1, mais aussi un autre composant repéré par 1', situé dans une autre rectangle, et incluant seulement une seule photodiode unitaire 3'.

Après mise en oeuvre des opérations de fabrication qui sont décrites plus bas, cette plaquette est découpée, coriformément à un quadrillage portant la référence 19 sur la figure, et dont chaque rectangle définit un composant.

Les composants selon l'invention sont fabriqués par dépôts de couches successives, par réalisation de cavités dans ces couches, les éléments optoélectroniques étant ensuite positionnés à affleurement dans ces cavités, et par dépôt de couches supplémentaires pour constituer les guides d'ondes couplés à ces éléments optoélectroniques.

Le procédé de fabrication est décrit ci-dessous pour le cas d'un composant comprenant une photodiode, mais ce procédé est applicable à la fabrication par plaquettes entières, c'est-à-dire à une fabrication automatisée en quantités importantes.

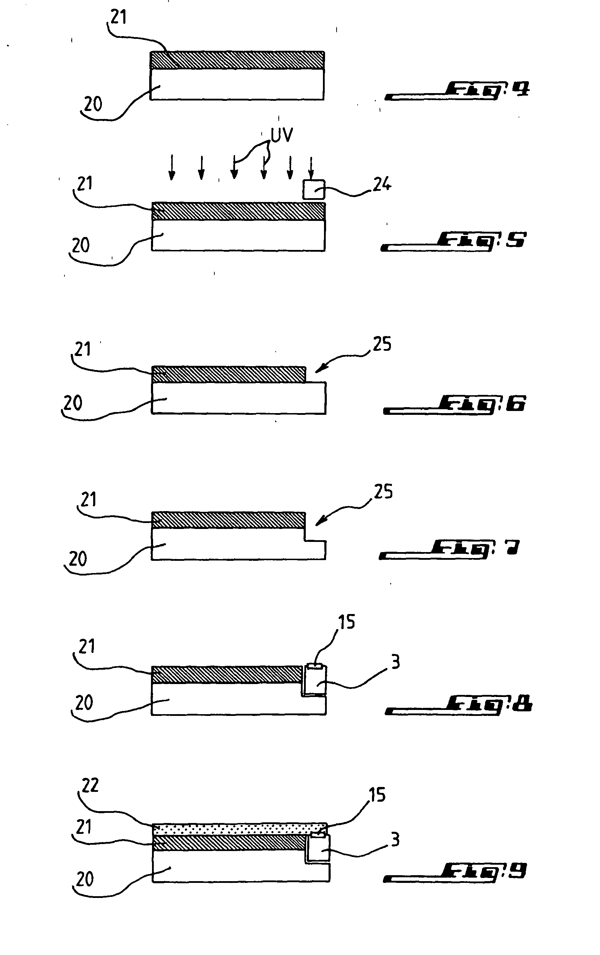

Les étapes principales de ce procédé de fabrication sont représentées successivement sur les figures 4 à 13.

La figure 4 montre un substrat de silicium, ou autre semi-conducteur 20, sur lequel est déposée une couche tampon 21. Ce dépôt est fait avec les procédés dits, "à la tournette", "par trempage-tirage", "par dépôt par spray ou par rideau'' à partir d'une solution de matériaux hybrides photosensibles.

Figure 5, la couche tampon 21 est cachée par un masque 24 reproduisant un motif de gravure envisagé, à savoir un motif dans lequel seul l'emplacement où vont être placées les photodiodes et les repères d'alignements n'est pas insolé.

Cette couche est ensuite insolée par ultrat-violet de sorte que la partie de la couche 21 insolée devient insoluble dans les solvants alcooliques, tandis que la partie non insolée est soluble.

Figure 6, la partie non insolée de la couche 21 est dissoute dans un solvant tel qu'un solvant alcoolique de type méthanol, éthanol, propanol, isopropanol, butanol 1, butanol 2, de l'acétone, ou autre.

Ceci permet de constituer dans la couche 21 une cavité 25 destinée à recevoir un élément optoélectronique.

Comme visible Figure 7, la cavité 25 est ensuite agrandie en direction du support 20 par gravure. Cette opération est réalisée selon la méthode de gravure dite ''Reactive Ion Etching (RIE)'' qui permet une gravure profonde anisotropique, de manière à constituer une cavité 25 ayant des flans abrupts, qui ne dépassent pas sous la couche tampon 21.

La gravure RIE du support 20 permet de plus de contrôler la profondeur de gravure avec une précision submicronique. Cette profondeur peut ainsi être ajustée en fonction de l'épaisseur de la photodiode, pour que le haut de celle-ci soit sensiblement au même niveau que la surface supérieure de la couche tampon 21.

Cette gravure RIE profonde est réalisée à travers la couche tampon 21 qui est en matériau hybride organique inorganique. La couche tampon 21 n'est que très peu attaquée par la gravure RIE, ce qui n'altère pas sa planéité, ni son caractère isolant optique, vis-à-vis du substrat.

La figure 8 montre l'implantation dans la cavité 25 d'une photodiode repérée par 3, de sorte que sa surface active 15 est positionnée sensiblement dans le prolongement de la surface supérieure de la couche tampon 21.

Comme décrit plus bas, dans le cas notamment d'éléments optoélectroniques autres que des photodiodes, d'autres ajustements de la position de l'élément optoélectronique par rapport à la surface supérieure de la couche tampon 21 pourront avantageusement être envisagés.

Dans le cas d'un couplage par ondes évanescentes, il est nécessaire de positionner la photodiode de telle manière que la surface active 15 soit la plus proche possible du flanc de la cavité 25 afin de réduire les pertes dans le couplage.

La figure 9 montre une couche guidante 22 déposée sur la couche tampon 21, un guide d'onde étant inscrit puis gravé dans cette couche guidante.

Plus particulièrement, chaque guide d'onde est photo-inscrit dans la couche guidante 22, pour avoir une extrémité située sur la surface active 15 de la photodiode 3.

Ce guide d'onde peut être inscrit par masquage ou par écriture directe au laser. Le trempage dans un solvant de type alcool, acétone, ou toute autre solution qui permet de dissoudre la partie non insolée sans dissoudre la partie insolée, permet de révéler ce guide d'onde.

Un contrôle du couplage peut ainsi être fait par simple visualisation au microscope de façon à vérifier que le guide d'onde recouvre effectivement la zone active du composant électronique.

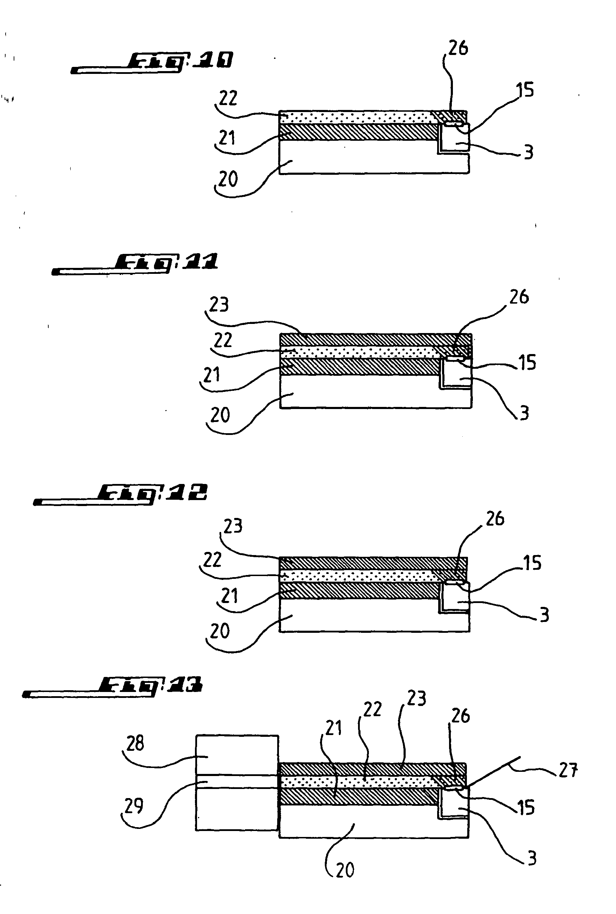

La figure 10 montre un réseau de Bragg blazé 26 qui est inscrit en extrémité du guide d'onde, c'est-à-dire dans la zone d'extrémité de ce guide d'onde qui est couplée à la surface active 15 de la photodiode.

Figure 11, l'ensemble du guide d'onde est recouvert avec une couche 23 qui est sensiblement identique à la couche tampon 21, de manière à constituer une structure guidante homogène et idéale.

Figure 12, la couche 23 a été masquée et insolée sur toute sa surface hormis une zone correspondant aux contacts métalliques de la photodiode 3, pour rendre les contacts électriques accessibles en supprimant la partie de la couche 23 qui les recouvre sur la figure 11.

Figure 13, la photodiode est connectée par couplage à une fibre optique 29 entourée par une gaine 28, d'une part, et d'autre part par soudage de fils conducteurs 27 aux contacts électriques de la photodiode.

Le composant peut aussi être couplé directement à une matrice de fibres optiques s'il s'agit de coupler plusieurs fibres optiques à plusieurs photodiodes distinctes ou à une barrette de photodiodes.

Le coût de fabrication induit par l'ensemble du procédé peut être réduit par diminution de la précision de gravure nécessaire au cours de l'opération de gravure RIE de la figure 7.

Plus particulièrement, la profondeur de la gravure RIE peut être ajustée pour que la photodiode, une fois collée soit à un niveau légèrement inférieur à celui de la surface supérieure de la couche de tampon. De cette manière, une couche supplémentaire très fine, de quelques micromètres, du même matériau que la couche tampon 21, peut être déposée sur l'ensemble du composant afin de gommer les imperfections liées à la gravure RIE, et afin d'homogénéiser l'épaisseur sur l'ensemble de la plaquette. La couche supplémentaire étant déposée en phase liquide, la surface finale obtenue est ainsi parfaitement plane.

Dans ce cas, il est nécessaire de prévoir l'inscription d'un réseau de Bragg blazé pour assurer un couplage optimal, mais en contre partie, il n'est pas nécessaire que la surface active 15 de la photodiode soit positionnée contre le flanc de la cavité 25, ce qui permet d'utiliser une photodiode standard.

L'élément optoélectronique de ce composant, peut également être un élément du type laser à émission par la surface, encore connu sous la dénomination VCSEL, ou bien une barrette de VCSEL.

Dans ce cas, le signal étant alors émis par l'élément optoélectronique VCSEL, il est nécessaire de prévoir un couplage par réseau de Bragg blazé inscrit dans l'extrémité du guide d'onde, depuis la surface d'émission vers l'extrémité du guide d'onde, ce réseau ayant alors une période ajustée pour réfléchir le signal émis. D'autre part, dans ce cas, l'extrémité du guide d'onde recouvre avantageusement la totalité de la surface active émettrice de la diode laser, de manière à optimiser encore le couplage.

Une stabilisation en température du composant peut être réalisée en plaçant un système Peletier sur celui-ci, dans le but d'assurer que la longueur d'onde du signal émis par le laser soit constante et stable.

Selon un mode de réalisation qui ne fait pas partie de l'invention l'élément optoélectronique peut aussi être une diode laser à émission par la tranche.

Dans ce cas, la profondeur de gravure qui définit la profondeur de la cavité 25 dans l'étape de la figure 7, est ajustée pour que la zone d'émission de laser se situe à 2 ou 3 micromètres au-dessus de la surface supérieure de la couche tampon 21, c'est-à-dire à mi-hauteur du guide d'onde correspondant.

Ainsi, le guide d'onde, une fois inscrit est situé à une hauteur qui permet une émission laser sensiblement au milieu du coeur du guide. Ce guide d'onde peut être inscrit après ou avant collage de l'élément optoélectronique laser à émission par la tranche, la mise en oeuvre d'un procédé d'inscription directe par laser permettant de faire arrêter l'extrémité du guide d'onde avec une précision de l'ordre de 0,1 microns.

Le procédé de fabrication selon l'invention offre de multiples avantages :

La fabrication des guides d'ondes est entièrement réalisée à des températures inférieures à 150°C, ce qui permet de fabriquer des guides d'ondes sur un même substrat que celui où ont été implantées des photodiodes ou autres composants optoélectronique, sans les détériorer. Le dépôt des couches, l'inscription des guides ainsi que la gravure pouvant être réalisées à température ambiante.

L'opération de gravure de la cavité 25 est réalisée en utilisant la couche tampon 21 comme couche de masquage, ce qui permet de réduire le nombre d'opérations en évitant de mettre en oeuvre une couche de masquage sacrificielle supplémentaire, et par là même d'augmenter la précision de cette opération.

L'inscription des guides d'ondes peut être faite par laser avec une précision de l'ordre du dixième de micron sur la surface active 15 de la photodiode.

Avantageusement, l'inscription du réseau de Bragg 26 est faite selon le procédé divulgué dans la publication de brevet européen n°1300704. Ainsi, l'énergie nécessaire à cette photoinscription est suffisamment faible pour ne pas risquer de détériorer la photodiode ou autre composant optoélectronique.

Il est ainsi de plus possible de photoinscrire le réseau de Bragg sans contact avec le guide d'onde, ce qui permet l'inscription d'un réseau de Bragg présentant un angle par rapport à l'axe du guide, c'est-à-dire un réseau de Bragg blazé.

De plus, les photodiodes ou autre élément optoélectronique peuvent être fabriquées directement sur la plaquette au lieu d'être collées sur celle-ci, le procédé de fabrication des guides d'ondes étant compatible avec tout type de substrat, tel que silicium, composés semi-conducteurs, verre, métal, polymères ou autres.

Il est également possible d'implanter dans un même composant, un ou plusieurs guides d'ondes couplés avec une ou plusieurs photodiodes et un ou plusieurs guides d'ondes couplés avec une ou plusieurs diodes laser. Il est ainsi possible de fabriquer des composants intégrant une ou plusieurs voies d'émission et une ou plusieurs voies de réception.

Une barrette de photodiode ou de diodes laser peut être couplée avec une ou plusieurs fibres optiques via soit un soit plusieurs guides d'ondes ou avec une fonction optique. Une telle fonction optique peut être de type multiplexeur ou démultiplexeur optique, circuit d'insertion ou d'extraction de longueur d'onde, stabilisateur optique de source ou autres, ces fonctions optiques étant réalisées sur la base de guides d'ondes et/ou de réseaux de Bragg.

## Revendications

1. Composant (1) comprenant un substrat (20) et une couche tampon (21) déposée sur ce substrat (20), un élément optoélectronique (3, 3', 4, 5, 6) tel qu'une photodiode ou une diode laser à émission de surface, cet élément optoélectronique (3, 3', 4, 5, 6) ayant une surface active (15) , et un guide d'onde (7, 8, 9, 10) s'étendant sur une surface supérieure de la couche tampon (21) et ayant une extrémité accouplée à la surface active (15), **caractérisé en ce que** l'élément optoélectronique (3, 3', 4, 5, 6) est positionné à affleurement dans une cavité (25) traversant la couche tampon (21) et s'étendant jusque dans le substrat (20), sa surface active (15) étant sensiblement au même niveau que la surface supérieure de la couche tampon (21), et **en ce que** l'extrémité du guide d'onde (7, 8, 9, 10) recouvre au moins partiellement la surface active (15).

2. Composant selon la revendication 1, dans lequel l'élément optoélectronique est un laser à émission de surface.

3. Composant selon la revendication 1, dans lequel l'extrémité du guide d'onde (7, 8, 9, 10) est couplée à la surface active (15) de l'élément optoélectronique (3, 3', 4, 5, 6) par couplage par ondes évanescentes.

4. Composant selon la revendication 1, dans lequel l'extrémité du guide d'onde (7, 8, 9, 10) est couplée à la surface active (15) de l'élément optoélectronique (3, 3', 4, 5, 6) par un réseau de Bragg blazé inscrit dans l'extrémité du guide d'onde.

5. Composant selon l'une des revendications précédentes, comprenant une ou plusieurs fonctions optiques accouplée à un ou plusieurs des éléments optoélectroniques (3, 3', 4, 5, 6), et dans lequel au moins une fonction optique est réalisée à partir de guides d'onde et de réseau de Bragg.

6. Procédé de fabrication d'un composant (1) incluant un élément optoélectronique, consistant à _{:}
- déposer une couche tampon (21) sur un substrat (20) ;
- réaliser une cavité (25) traversant la couche tampon et s'étendant jusque dans le substrat ;
- positionner un élément optoélectronique (3, 3', 4, 5, 6) dans la cavité (25) ;
- déposer une couche de guidage (22) sur la couche tampon et sur l'élément optoélectronique (3, 3', 4, 5, 6) ;
- réaliser un guide d'onde dans cette couche de guidage (22) ;
- déposer une autre couche tampon (23) sur le guide d'onde et sur la couche tampon (21).

## Claims

1. A device (1) comprising a substrate (20) and a buffer layer (21) deposited on said substrate (20), an optoelectronic element (3, 3', 4, 5, 6) such as a photodiode or a surface emission laser diode, this optoelectronic element (3, 3', 4, 5, 6) having an active surface (15), and a waveguide (7, 8, 9, 10) extending over an upper surface of the buffer layer (21) and having an end coupled to the active surface (15), **characterized in that** the optoelectronic element (3, 3', 4, 5, 6) is flush-mounted in a cavity (25) passing through the buffer layer (21) and extending into the substrate (20), its active surface (15) being substantially at the same level as the upper surface of the buffer layer (21), and **in that** the end of the waveguide (7, 8, 9, 10) at least partially covers the active surface (15).

2. The device according to claim 1, wherein the optoelectronic element is a surface emission laser.

3. The device according to claim 1, wherein the end of the waveguide (7, 8, 9, 10) is coupled to the active surface (15) of the optoelectronic element (3, 3', 4, 5, 6) by evanescent wave coupling.

4. The device according to claim 1, wherein the end of the waveguide (7, 8, 9, 10) is coupled to the active surface (15) of the optoelectronic element (3, 3', 4, 5, 6) by a blazed-distributed Bragg reflector fitted into the end of the waveguide.

5. The component according to one of the preceding claims, comprising one or more optical functions coupled to one or more optoelectronic elements (3, 3', 4, 5, 6), and wherein at least one optical function is carried out from waveguides and a Bragg reflector.

6. A method of manufacturing a device (1) including an optoelectronic element, consisting of:
- depositing a buffer layer (21) on a substrate (20);
- making a cavity (25) passing through the buffer layer and extending into the substrate;
- positioning an optoelectronic element (3, 3', 4, 5, 6) in the cavity (25);
- depositing a guide layer (22) on the buffer layer and on the optoelectronic layer (3, 3', 4, 5, 6);
- making a waveguide in said guide layer (22);
- depositing another buffer layer (23) on the waveguide and on the buffer layer (21).

## Patentansprüche

1. Bauteil (1), das ein Substrat (20) und eine auf diesem Substrat (20) abgelagerte Pufferschicht (21), ein optoelektronisches Element (3, 3`, 4, 5, 6) wie zum Beispiel eine Fotodiode oder eine Laserdiode mit Oberflächenemission, wobei dieses optoelektronische Element (3, 3', 4, 5, 6) eine aktive Oberfläche (15) hat, und einen Lichtwellenleiter (7, 8, 9, 10), der sich über eine oberen Oberfläche der Pufferschicht (21) erstreckt und an die aktive Oberfläche (15) gekoppeltes Ende hat, umfasst, **dadurch gekennzeichnet, dass** das optoelektronische Element (3, 3', 4, 5, 6) bündig in einem Hohlraum (25) positioniert ist, der die Pufferschicht (21) durchquert und sich bis in das Substrat (20) erstreckt, wobei seine aktive Oberfläche (15) etwa auf derselbe Ebene wie die obere Oberfläche der Pufferschicht (21) ist, und dass das Ende des Lichtwellenleiters (7, 8, 9, 10) die aktive Oberfläche (15) zumindest teilweise bedeckt.

2. Bauteil nach Anspruch 1, wobei das optoelektronische Element ein Laser mit Oberflächenemission ist.

3. Bauteil nach Anspruch 1, wobei das Ende des Lichtwellenleiters (7, 8, 9, 10) an die aktive Oberfläche (15) des optoelektronischen Elements (3, 3', 4, 5, 6) durch Kopplung durch abklingende Wellen gekoppelt ist.

4. Bauteil nach Anspruch 1, wobei das Ende des Lichtwellenleiters (7, 8, 9, 10) an die aktive Oberfläche (15) des optoelektronischen Elements (3, 3', 4, 5, 6) durch ein in das Ende des Lichtwellenleiters eingearbeitetes Bragg-Gitter mit blaze-Bereich gekoppelt ist.

5. Bauteil nach einem der vorangehenden Ansprüche, das eine oder mehrere mit einem oder mehreren der optoelektronischen Elemente (3, 3', 4, 5, 6) gekoppelte optische Funktionen aufweist und bei dem mindestens eine optische Funktion von Lichtwellenleitern und Bragg-Gitter umgesetzt wird.

6. Verfahren zur Herstellung eines Bauteils (1), das ein optoelektronisches Element einschließt, das besteht aus:
- Aufbringen einer Pufferschicht (21) auf einem Substrat (20),
- Einarbeiten eines die Pufferschicht durchquerenden Hohlraums (25), der sich bis in das Substrat erstreckt,
- Positionieren eines optoelektronischen Elements (3, 3 `, 4, 5, 6) in den Hohlraum (25),
- Aufbringen einer Führungsschicht (22) auf der Pufferschicht und auf das optoelektronische Element (3, 3', 4, 5, 6),
- Umsetzen eines Lichtwellenleiters in dieser Führungsschicht (22),
- Aufbringen einer anderen Pufferschicht (23) auf dem Lichtwellenleiter und auf der Pufferschicht (21).
